# EUROPEAN PATENT APPLICATION

(11) **EP 2 415 520 A2**
(43) Date of publication of application: **08.02.2012**
(21) Application number: 10759048.1
(22) Date of filing: 01.04.2010
(51) Int. Cl.: B01J 27/18, B01J 27/19, C10L 1/08, C10G 3/00

(54) **METAL PHOSPHORUS COMPOUND FOR PREPARING BIODIESEL AND METHOD FOR PREPARING BIODIESEL USING THE SAME**

(30) Priority: 01.04.2009 KR 20090028222; 30.03.2010 KR 20100028284
(71) Applicant: SK INNOVATION CO., LTD., Jongro-gu Seoul 110-110 (KR)
(72) Inventor: LEE, Sang Il, Daejeon 305-509 (KR); KIM, Do Woan, Daejeon 305-509 (KR); JEON, Hee Jung, Daejeon 305-370 (KR); JU, Sang Jun, Busan 617-755 (KR); RYU, Jae Wook, Daejeon 305-728 (KR); OH, Seung Hoon, Seoul 135-836 (KR); KOH, Jae Hyun, Daejeon 302-740 (KR)
(74) Representative: Gerbino, Angelo
(86) International application number: PCT/KR2010/002016
(87) International publication number: WO 2010/114323

(57) **Abstract**

Disclosed is a catalyst including metal phosphide for preparation of biodiesel, and a method of preparing biodiesel from feedstock comprising vegetable oil through hydrotreating using the catalyst. When the catalyst including metal phosphide is used as a catalyst for preparation of biodiesel, preparation activity of hydrotreated biodiesel is high even without continuous supply of sulfiding agent, and hydrotreating and isomerization reactions occur at the same time, thus obtaining high-quality hydrotreated biodiesel having a low pour point.

## Description

### Technical Field

The present invention relates to a catalyst including metal phosphide for preparing biodiesel and a method of preparing biodiesel using the same.

### Background Art

With the continuation of high oil prices, the need for the development of alternative energies and the reduction of greenhouse gases has come to the forefront all over the world, and thus the development of bioenergy resourses is under thorough study. Further, while domestic and foreign supplies of biodiesel increase depending on taxation and legislation all over the world, bioenergy-related markets have maintained a high growth rate of 8~12% per year.

A technique for preparing a diesel fraction from biomass is typically represented by preparation of FAME (Fatty Acid Methyl Ester). FAME is advantageous because it is alternative energy obtained from biomass, and, from the point of physical properties, its cetane number is higher than that of a diesel fraction obtained from conventional mineral oil. However, FAME has drawbacks such as poor oxidative stability and high preparation cost.

In next-generation technology, there is proposed hydrotreated biodiesel (HBD) resulting from direct hydrotreating of a triglyceride. Although HBD has a higher production cost than that of diesel obtained from conventional mineral oil, it has lower production cost and imparts relatively high oxidative stability through hydrotreating, compared to conventional FAME.

Also, HBD is capable of producing high-graded diesel oil having a cetane number approximate to 100, and is very advantageous in terms of energy efficiency or reduction of greenhouse gases, compared to mineral oil or FAME.

The process of preparing HBD is largely classified into two, one of which is composed exclusively of hydrotreating, and the other of which is composed of hydrotreating and then isomerization.

The 'hydrotreating' of the HBD indicates a process for converting fat or fatty acid into hydrocarbons through a reaction using hydrogen, and analogous terms thereof include hydrogenation, deoxygenation, hydrodeoxygenation, decarboxylation, and decarbonylation. As such, decarboxylation and decarbonylation cause hydrotreating while eliminating a carbon atom from fat or fatty acid of a feed, and are thus used as the term analogous to hydrotreating in the preparation of HBD.

Vegetable oil, generally used as a feed for preparing biodiesel, consists of triglyceride. When triglyceride in an ester form is hydrotreated, a C₁₅~C₁₈ paraffinic material is obtained. This material may be used as biodiesel because its boiling point belongs to the diesel range.

However, the HBD which is paraffinic biodiesel undesirably has a high pour point. The pour point indicates the minimum temperature at which the flow of fuel is possible. Typically, if the pour point is high, there occurs a problem in which a feed cannot be maintained in a liquid state at a relatively low temperature. In the case of HBD which is paraffinic diesel, it has high pour point and therefore exhibits flow properties at low temperature inferior to that of FAME or mineral oil obtained from petroleum. The problem caused by the flow properties at low temperature is regarded as insignificant in high-temperature regions including South-East Asia where a feed is easy to obtain and the application of HBD is favorable, but must be solved in low-temperature regions including Europe or North America.

Methods for solving the above problem have been two to date. One method is the addition of a small amount of biodiesel to mineral oil. In this case, biodiesel is dispersed in mineral oil, and thus high pour point problems of biodiesel may be solved to some degree. However, because the threshold amount of biodiesel to be added depending on the temperature is preset, an amount exceeding the standard amount cannot be added. The other method is to increase the pour point through isomerization. This method converts a paraffinic hydrocarbon into a hydrocarbon having many branches, thus decreasing the pour point. Thereby, biodiesel having the pour point equal to that of mineral oil may be prepared. In this case, however, high equipment cost is required, and also, because isomerization is a hydrotreating process, it demands a high maintenance cost.

The other problem in the preparation of HBD is that sulfiding agent should be added to continuously maintain the active state of the catalyst. The catalyst for HBD is a conventional hydrotreating catalyst which is mainly provided in the form of a group VIB-VIII metal compound. The active sites of this catalyst have a mixture structure of VIB-VITI-sulfur/support. Because sulfur is continuously eliminated during the reaction, sulfur must be continuously supplied so that the active sites are maintained.

In a conventional hydrotreating process, the feed itself contains sulfur, and thus the activity of the catalyst may be maintained even without additional use of sulfiding agent. However, in the preparation of HBD, because the vegetable oil used as a feed contains not sulfur but oxygen, the catalyst may be easily deactivated by reaction with oxygen.

To overcome this problem, not more than 1% of a sulfur compound such as dimethyl disulfide (DMDS) may be mixed with the feed and then treated, or a sulfur-containing hydrocarbon may be mixed with the feed and then treated.

In regard to the conventional preparation of HBD, US 4,992,605 discloses a process of preparing biodiesel from crude palm oil using CoMo, NiMo or a transition metal as a commercially available hydrotreating catalyst.

US 2007/0175795 discloses the use of Ni, Co, Fe, Mn, W, Ag, Au, Cu, Pt, Zn, Sn, Ru, Mo, Sb, V, Ir, Cr, or Pd as a component of a catalyst for hydrotreating triglyceride.

US 7232935 discloses a process of preparing HBD from vegetable oil through hydrotreating and then isomerization in that order using a catalyst.

US 7279018 discloses the preparation of a product by mixing HBD which is hydrotreated and then isomerized with about 0~20% of an oxygen-containing component.

Also, in US 2007/0010682, hydrotreating and isomerization are performed, using a feed containing 5 wt% or more of free fatty acid and a diluent, in which the ratio of diluent to feed is set to 5~30:1.

In US 2006/0207166, hydrotreating and isomerization are performed in a single step, using a catalyst obtained by supporting an active metal for a hydrotreating reaction on a support having an isomerization function such as zeolite.

As mentioned above, in the production of HBD to date, the conventional hydrotreating catalyst which is commercially available may be employed in a state of being unchanged or improved, without requiring a specified hydrotreating catalyst.

### Disclosure

### Technical Problem

Therefore, the present invention has been made keeping in mind the problems encountered in the related art and provides a catalyst including metal phosphide for preparation of high-quality biodiesel having a low pour point through only a hydrotreating process without additional isomerization process, while exhibiting high hydrotreating activity even without the addition of sulfiding agent.

Also, the present invention provides a method of preparing biodiesel using the above catalyst.

Also, the present invention provides biodiesel prepared using the above method.

### Technical Solution

An aspect of the present invention provides a catalyst for preparation of biodiesel, including metal phosphide as an active component for hydrotreating or isomerization.

In one embodiment of the present invention, the metal phosphide as an active metal may be obtained by binding a group VIB metal, a group VIII metal, a group VIIB metal or a mixture thereof with P.

In another embodiment of the present invention, the catalyst may composed exclusively of the metal phosphide, or may further include as a support or a binder, carbon, an alkali earth metal oxide, an alkali metal oxide, alumina, silica, silica-alumina, zirconia, titania, silicon carbide, niobia, aluminum phosphate or a mixture thereof

In one embodiment of the present invention, the metal phosphide obtained by binding the group VIB metal with P may include MoP or WP in which an amount of Mo or W is 1~90 wt% and an amount of P is 10 -99 wt%.

In one embodiment of the present invention, the metal phosphide obtained by binding the group VIII metal with P may include Ni₂P, PdP or PtP in which an amount of Ni, Pd or Pt is 1~90 wt% and an amount of P is 10~99 wt%.

In one embodiment of the present invention, the metal phosphide obtained by binding the group VIIB metal with P may include Co₂P, RuP, FeP or MnP in which an amount of Co, Ru, Fe or Mn is 1~90 wt% and an amount of P is 10~99 wt%.

In one embodiment of the present invention, the catalyst containing P may include NiMoP, CoMoP, CoNiMoP, CoNiP, NiWP, CoWP, CoNiWP, or MoWP, in which an amount of the active metal is 1~95 wt% and an amount of P is 5~99 wt%.

In one embodiment of the present invention, an amount of the group VIB metal, the group VIII metal, the group VIIB metal or a mixture thereof is 1~100 wt% based on support.

Another aspect of the present invention provides a method of preparing biodiesel through hydrotreating or isomerization using the above catalyst.

In one embodiment of the present invention, in the method, the biodiesel may be prepared using, as a feed, biomass of vegetable oil, vegetable fat, animal fat, fish oil, recycled fat, vegetable fatty acid, animal fatty acid or a mixture thereof.

In one embodiment of the present invention, as such, the fat may include fat consisting of triglycerides each chain of which has 1~28 carbon atoms, and the fatty acid may include fatty acid having 1~28 carbon atoms.

In another embodiment of the present invention, in the method, the biodiesel may be prepared using, as the feed, a mixture of the biomass and 0~99% of at least one hydrocarbon.

In one embodiment of the present invention, as such, the hydrocarbon may include kerosene, diesel, LGO, and recycled hydrotreated biodiesel.

In another embodiment of the present invention, the method further comprise pretreating the feed through hydrotreating, performing hydrodeoxygenation thus separating unreacted hydrogen, and cooling and separating produced hydrocarbon.

A further aspect of the present invention provides biodiesel prepared through the above method.

### Advantageous Effects

According to the present invention, the catalyst for biodiesel can maintain high hydrotreating activity for a long period of time without the use of sulfiding agent, and can produce high-quality biodiesel having a low pour point while exhibiting extended high activity through only a hydrotreating process.

### Description of Drawings

FIG. 1 shows a process of preparing HBD using 100% vegetable oil as a feed; and
FIG. 2 shows a process of preparing HBD using a mixture composed of vegetable oil and hydrocarbon as a feed.

### Mode for Invention

Hereinafter, a detailed description will be given of the present invention.

The present invention relates to a catalyst including metal phosphide for preparation of biodiesel through hydrotreating.

As catalyst including metal phosphide, the catalyst may be used in form of metal phosphide alone, or in form of supporting the metal phosphide using support or binder.

The catalyst including metal phosphide according to the present invention can maintain high hydrotreating activity for a long period of time even without the use of sulfiding agent, and also can reduce the pour point of HBD through only a hydrotreating process without performing an isomerization process.

Therefore, the catalyst including metal phosphide according to the present invention may be applied not only to the HBD preparation process but also to the hydrotreating process in the absence of sulfuide. The catalyst including metal phosphide according to the present invention may be applied not only to the HBD preparation process but also to any process of reducing the pour point of a product obtained through hydrotreating.

The metal phosphide which is an active component used in the present invention is obtained by binding P to a group VIB, VIII or VIIB metal or a mixture thereof as an active metal.

The present inventors can increase the acid sites of the metal by introducing the phosphide and thus increase the reaction efficiency for hydrotreating and also for isomerization in the preparation of biodiesel.

Examples of the metal phosphide include but are not limited to MoP and WP in which the group VIB metal and P are bound, Ni₂P, PdP and PtP in which the group VIII metal and P are bound, and Co₂P, RuP, FeP and MnP in which the group VIIB metal and P are bound.

Specific examples of the metal phosphide used in the present invention include MoP, NiMoP, CoMoP, CoNiMoP, CoNiP, Ni₂P, Co₂P, WP, NiWP, CoWP, CoNiWP and so on.

In the present invention, the metal phosphide composed of a group VIB metal and P bound together includes 1~90 wt% of the active metal. If the amount of the active metal is less than 1 wt%, the activity of the catalyst is very low and thus the catalyst does not function. In contrast, if the amount thereof exceeds 90 wt%, the preparation of the catalyst is impossible.

The catalyst used in the present invention may be composed of metal phosphide or may be composed of a support or a binder and metal phosphide supported thereon. The support or binder may be carbon, an inorganic metal oxide, and mixtures thereof. Also, the inorganic metal oxide may be an alkali earth metal oxide, an alkali metal oxide, alumina, silica, silica-alumina, zirconia, titania, silicon carbide, niobia, aluminum phosphate and mixtures thereof.

The metal phosphide composed of a group VIB, VIII or VIIB metal and P bound together includes 1~90 wt% of the active metal. If the amount of the active metal is less than 1 wt%, the activity of the catalyst is very low and thus the catalyst does not function. In contrast, if the amount thereof exceeds 90 wt%, the preparation of the catalyst is impossible.

In the present invention, the biodiesel may be prepared using, as a feed, biomass of vegetable oil, vegetable fat, animal fat, fish oil, recycled fat, vegetable fatty acid, animal fatty acid or mixtures thereof.

As such, the fat may include fat consisting of triglycerides each chain of which has 1~28 carbon atoms, and the fatty acid may include fatty acid having 1~28 carbon atoms, but the present invention is not limited thereto.

Alternatively, the biodiesel may be prepared using, as the feed, a mixture of the biomass and at least one hydrocarbon (0~99%). Examples of the hydrocarbon include but are not limited to kerosene, diesel, LGO, and recycled HBD.

The HBD preparation process may include a series of procedures for pretreatment of the feed through hydrotreating, hydrodeoxygenation thus separating unreacted hydrogen, and cooling and separation of produced hydrocarbon. As such, one or two steps may be added or omitted depending on predetermined purposes.

The HBD preparation process using 100% vegetable oil as the feed is shown in FIG.1, but the present invention is not limited thereto.

FIG. 2 shows the HBD preparation process using a mixture of vegetable oil and hydrocarbon as the feed. This process is different from the process using 100% vegetable oil in that a fractionator for separating hydrocarbon is provided.

The mixture of vegetable oil and 1% DMDS, serving as the feed, and hydrogen may be simultaneously supplied into a HBD reactor so that they are hydrotreated. The reaction mixture thus obtained may be distilled using a stripper and fractionated depending on boiling points, thus extracting only HBD. The other materials are recycled.

Below, the specified catalyst for HBD according to the present invention and the method of preparing biodiesel from biomass through hydrotreating using the same are described in detail.

### EXAMPLE 1: Preparation of MoP/ZrO₂ Catalyst

A catalyst composed of about 5 wt% of Mo and about 3 wt% of P using a ZrO₂ support having a diameter of 1 mm was prepared.

As a Mo precursor, ammonium heptamolybdate tetrahydrate (hereinafter, AHM) was used, and as a P precursor ammonium phosphate (hereinafter, AP) was used.

AP and AHM were dissolved in distilled water, supported on the ZrO₂ support, dried at 150°C for 2 hours, and continuously burned at 500°C for 2 hours, thus preparing MoP/ZrO₂.

In addition to AHM as the Mo precursor, molybdenum acetate, molybdenum chloride, molybdenumhexacarbonyl, phosphomolybdic acid, molybdic acid and so on may be used, but the present invention is not limited thereto. Also, the P precursor is not limited to AP, and examples thereof may include phosphorous acid, red phosphorus, yellow phosphorus and so on.

Then, a cylindrical reactor was packed with 6 cc of the catalyst thus obtained, after which the temperature thereof was increased to 650°C while allowing H₂ to flow at a rate of 200 cc/min under conditions of room temperature and a pressure of 30 bar. When the temperature reached 650°C, pretreatment was performed for 2 hours.

Using the pretreated MoP/ZrO₂ catalyst, under conditions of a reaction temperature of 320°C, a reaction pressure of 30 bar and H₂ supplied at 100 cc/min, a feed composed of 100% soybean oil was allowed to react at a rate of 0.1 cc/min (LHSV =1). The sampling was performed every 8 hours. The properties of the resultant reaction product were analyzed through SimDist, the leaching of the catalyst was analyzed through ICP, and the degree of isomerization was analyzed through GC.

### EXAMPLE 2: Preparation of Ni₂P/ZrO₂ catalyst

A catalyst composed of about 6 wt% of Ni and about 3 wt% of P using a ZrO₂ support having a diameter of 1 mm was prepared. As a Ni precursor, nickel nitrate (hereinafter, NN) was used, and as the P precursor, Ammonium phosphate (hereinafter, AP) was used.

The Ni metal is not provided only in the form of NN, but various precursors such as nickel acetate, nickel acetylacetonate, nickel chloride, nickel hydroxide, nickel oxalate and so on may be used.

The Ni₂P/ZrO₂ catalyst was prepared through the following procedures.

First, NN and AP were dissolved in distilled water, supported on the ZrO₂ support, dried at 150°C for 2 hours, and continuously burned at 500°C for 2 hours.

The pretreatment and reaction were performed under the same conditions as in Example 1, and analysis was carried out as in Example 1.

### EXAMPLE 3: Preparation of WP Catalyst

Without use of the support, a WP powder catalyst composed of W and P at a molecular ratio of 1:1 was prepared. As a W precursor, ammonium metatungstate (hearinafter, AMT) was used, and as the P precursor, ammonium phosphate (hereinafter, AP) was used.

The W metal is not provided only in the form of AMT, but various precursors such as tungsten hexacarbonyl, tungsten chloride and so on may be used.

The WP catalyst was prepared through the following procedures.

First, AMT and AP were dissolved in distilled water, mixed at a molecular ratio, dried and continuously burned at 500°C for 6 hours.

The pretreatment and reaction were performed under the same conditions as in Example 1, and analysis was carried out as in Example 1.

### EXAMPLE 4: Preparation of NiMoP/ZrO₂ Catalyst

Using a ZrO₂ support having a diameter of 1 mm, a catalyst composed of about 5 wt% of Mo, about 5 wt% ofNi and about 3 wt% of P was prepared. As the Mo precursor, ammonium heptamolybdate tetrahydrate (hereinafter, AHM) was used, as the Ni precursor, Nickel nitrate (hereinafter, NN) was used, and as the P precursor, ammonium phosphate (hereinafter, AP) was used.

First, AHM and AP were dissolved in distilled water, supported on the ZrO₂ support, dried at 150°C for 2 hours, and continuously burned at 500°C for 2 hours, thus preparing a MoP/ZrO₂ catalyst.

Then, NN was dissolved in distilled water, supported on the MoP/ZrO₂ catalyst, dried at 150°C for 2 hours, and continuously burned at 500°C for 2 hours, thus preparing a NiMoP/ZrO₂ catalyst.

The pretreatment and reaction were performed under the same conditions as in Example 1, and analysis was carried out as in Example 1.

### EXAMPLE 5: Preparation of MoP/Al₂O₃ Catalyst

Using an Al₂O₃ support having a diameter of 1 mm, a catalyst composed of about 5 wt% of Mo and about 3 wt% of P was prepared. As the Mo precursor, ammonium heptamolybdate tetrahydrate (hereinafter, AHM) was used, and as the P precursor, ammonium phosphate (hereinafter, AP) was used.

The MoP/Al₂O₃ catalyst was prepared through the following procedures.

First, AHM and AP were dissolved in distilled water, supported on the Al₂O₃ support, dried at 150°C for 2 hours, and continuously burned at 500°C for 2 hours, thus preparing the MoP/Al₂O₃ catalyst.

The pretreatment and reaction were performed under the same conditions as in Example 1, and analysis was carried out as in Example 1.

### EXAMPLE 6: Reaction of Mixed Feed (80% Kero-20% Soybean Oil) using MoP/ZrO₂Catalyst

A MoP/ZrO²catalyst was prepared in the same manner as in Example 1.

As a feed for preparation of HBD, a feed mixed with hydrocarbon (80% kero-20% soybean oil) was used. The pretreatment and reaction were performed under the same conditions as in Example 1.

### EXAMPLE 7: Supply of Sulfur Compound in MoP/ZrO₂ Catalyst

A MoP/ZrO₂ catalyst was prepared in the same manner as in Example 1.

A cylindrical reactor was packed with 6 cc of the MoP/ZrO₂ catalyst, after which a mixed solution of R-LGO and 3% DMDS was supplied at a rate of 0.04 cc/min and the temperature was increased to 400°C while allowing H₂ to flow at a rate of 16 cc/min under room temperature and a pressure of 45 bar. When the temperature reached 400°C, pretreatment was performed for 3 hours.

Using the MoP/ZrO₂ catalyst thus pretreated, under conditions of a reaction temperature of 350°C, a reaction pressure of 30 bar and H₂ supplied at 100 cc/min, a feed composed of 1% DMDS-containing soybean oil was allowed to react at a rate of 0.1 cc/min (LHSV =1). The sampling was performed every 8 hours. The properties of the resultant reaction product were analyzed through SimDist, and the leaching of the catalyst was analyzed through ICP.

### EXAMPLE 8: Supply of Sulfur Compound in CoMoP/TiO₂catalyst

Using a TiO₂ support having a diameter of 1 mm, a catalyst composed of about 5 wt% of Mo and about 3 wt% of P was prepared in the same manner as in Example 1.

As the Mo precursor, ammonium heptamolybdate tetrahydrate (hereinafter, AHM) was used, and as the P precursor, ammonium phosphate (hereinafter, AP) was used.

Supported on the MoP/TiO₂ catalyst was 5 wt% of Co. The Co precursor was cobalt nitrate hexahydrate(hereinafter, CNH.

The Co metal is not provided only in the form of CNH, but cobalt acetate, cobalt carbonate, cobalt chloride, cobalt phosphate and so on may be used.

CNH was dissolved in distilled water, after which CoMoP/TiO₂ was prepared, dried at 150°C for 2 hours, and continuously burned at 500°C for 2 hours, giving CoMoP/TiO₂.

A cylindrical reactor was packed with 6 cc of the catalyst thus obtained, after which the temperature thereof was increased to 650°C while allowing H₂ to flow at a rate of 200 cc/min under conditions of room temperature and a pressure of 30 bar. When the temperature reached 650°C, pretreatment was performed for 2 hours.

Using the CoMoP/TiO₂ catalyst thus pretreated, under conditions of a reaction temperature of 320°C, a reaction pressure of 30 bar and H₂ supplied at 100 cc/min, a feed composed of 100% soybean oil was allowed to react at a rate of 0.1 cc/min (LHSV =1). The sampling was performed every 8 hours. The properties of the resultant reaction product were analyzed through SimDist, the leaching of the catalyst was analyzed through ICP, and the degree of isomerization was analyzed through GC.

### COMPARATIVE EXAMPLE 1: Preparation of NiMo/Al₂O₃ Catalyst

Using an Al₂O₃ support having a diameter of 1 mm, a catalyst composed of about 10 wt% of Mo and about 3 wt% of Ni was prepared. As the Mo precursor, ammonium heptamolybdate tetrahydrate (hereinafter, AHM) was used, and as the Ni precursor, nickel nitrate hexahydrate (hereinafter, NNH) was used.

The NiMo/Al₂O₃ catalyst was prepared through the following procedures.

First, AHM was dissolved in distilled water, supported on the Al₂O₃ support, dried at 150°C for 2 hours, and continuously burned at 500°C for 2 hours, thus preparing a Mo/Al₂O₃ catalyst.

Then, 3.06 g of NNH was dissolved in distilled water, supported on the Mo/Al₂O₃ catalyst, dried at 150°C for 2 hours, and continuously burned at 500°C for 2 hours, thus preparing the NiMo/Al₂O₃ catalyst.

A cylindrical reactor was packed with 6 cc of the catalyst thus obtained, after which a mixed solution of R-LGO and 3% DMDS was supplied at a rate of 0.04 cc/min and the temperature was increased to 400°C while allowing H₂ to flow at a rate of 16 cc/min under conditions of room temperature and a pressure of 45 bar. When the temperature reached 400°C, pretreatment was performed for 3 hours.

Using the NiMo/Al₂O₃ catalyst thus pretreated, under conditions of a reaction temperature of 350°C, a reaction pressure of 30 bar and H₂ supplied at 100 cc/min, a feed composed of 1% DMDS-containing soybean oil was allowed to react at a rate of 0.1 cc/min (LHSV = 1). After 7 days, 1% DMDS supplied together with soybean oil was cut, and 100% soybean oil was supplied. The sampling was performed every 8 hours. The properties of the resultant reaction product were analyzed through SimDist, and the leaching of the catalyst was analyzed through ICP.

### COMPARATIVE EXAMPLE 2: Preparation of CoMo/Al₂O₃ Catalyst

A catalyst composed of about 10 wt% of Mo and about 3 wt% of Co using an Al₂O₃ support having a diameter of 1 mm was prepared. As the Mo precursor, ammonium heptamolybdate tetrahydrate (hereinafter, AHM) was used, and as the Co precursor, Cobalt nitrate hexahydrate (hereinafter, CNH) was used.

The CoMo/Al₂O₃ catalyst was prepared through the following procedures.

First, a Mo/Al₂O₃ catalyst was prepared in the same manner as in Comparative Example 1.

Then, CNH was dissolved in distilled water, supported on the Mo/Al₂O₃ catalyst, dried at 150°C for 2 hours, and continuously burned at 500°C for 2 hours, thus preparing the CoMo/Al₂O₃ catalyst.

The CoMo/Al₂O₃ catalyst was pretreated as in Comparative Example 1.

Using the CoMo/Al₂O₃ catalyst thus pretreated, under conditions of a reaction temperature of 350°C, a reaction pressure of 30 bar and H₂ supplied at 100 cc/min, a feed composed of 1% DMDS-containing soybean oil was allowed to react at a rate of 0.1 cc/min (LHSV = 1). After 7 days, 1% DMDS supplied together with soybean oil was cut, and 100% soybean oil was supplied. The sampling was performed every 8 hours. The properties of the resultant reaction product were analyzed through SimDist, and the leaching of the catalyst was analyzed through ICP.

Table 1 below shows diesel selectivity of the product in the HBD preparation using the metal phosphide.

**TABLE 1**

| Catalyst | Component Diesel Selectivity (%) | 1 day | 15 days | 30 days |
|---|---|---|---|---|
| Ex. 1 | MoP/ZrO₂ | 97 | 97 | 96 |
| Ex. 2 | Ni₂P/ZrO₂ | 92 | 90 | 84 |
| Ex. 3 | WP | 93 | 90 | 85 |
| Ex. 4 | NiMoP/ZrO₂ | 94 | 93 | 93 |
| Ex. 5 | MoP/Al₂O₃ | 93 | 91 | 89 |
| Ex. 6 | MoP/ZrO₂ (Mixed Feed) | 99 | 99 | 99 |
| Ex. 7 | MoP/ZrO₂ (containing DMDS) | 94 | 93 | 93 |
| Ex. 8 | CoMoP/TiO₂ | 93 | 93 | 93 |
| C.Ex. 1 | NiMo/Al₂O₃ | 92 | 91 | 86 |
| C. Ex. 2 | CoMo/Al₂O₃ | 91 | 89 | 88 |

As is apparent from the results of Table 1, in the case of the MoP/ZrO₂ catalyst, the activity thereof could be seen to be uniformly maintained even without the use of a sulfur compound.

Example 7 was executed to identify the catalyst poisoning effect of sulfur into the metal phosphide catalyst Example 7 demonstrated that the metal phosphine catalyst maintains the catalytic activity when kerosene or diesel such as hydrocarbons including sulfur is used as co-feed in the preparation ofbiodiesel.

Table 2 below shows the ratios of isomers in the product of Examples 1,3~5, and 7 and Comparative Examples 1-2. Referring to Example 6, the ratios of product depend on the properties of R-kerosene mixed with vegetable oil.

**TABLE2**

| Catalyst | I_{SO}-C15/C15 (%) | I_{SO}-C16/C16 (%) | I_{SO}-C17/C17 (%) | I_{SO}-C18/C18 (%) |
|---|---|---|---|---|
| Ex. 1 | 0 | 7.6 | 21.4 | 30.3 |
| Ex. 3 | 0 | 6.8 | 23.9 | 28.3 |
| Ex. 4 | 0 | 2.3 | 8.1 | 11.9 |
| Ex. 5 | 0 | 8.2 | 24.0 | 29.3 |
| Ex. 7 | 0 | 7.1 | 19.9 | 29.8 |
| C. Ex. 1 | 0 | 0 | 6.6 | 8.2 |
| C. Ex. 2 | 0 | 0 | 6.1 | 7.5 |

As is apparent from the results of Table 2, the CoNiMo/Al₂O₃ or NiMo/Al₂O₃ catalyst of Comparative Example 1 or 2 had a very low isomerization ratio of 6~8 %.

Thus, in the case of HBD prepared using the CoMo/Al₂O₃ catalyst or NiMo/Al₂O₃ catalyst, flow properties at low temperature should be additionally ensured.

In the case of the HBD product prepared using the MoP/ZrO₂ catalyst of Example 1, the isomerization ratio was about 20~30%. Accordingly, it was confirmed that HBD stable even at a relatively low temperature can be prepared.

## Claims

1. A catalyst for preparation of biodiesel, comprising a metal phosphide as an active component for hydrotreating or isomerization.

2. The catalyst as set forth in claim 1, wherein the metal phosphide as an active metal is obtained by binding a group VIB metal, a group VIII metal, a group VIIB metal or a mixture thereof with P.

3. The catalyst as set forth in claim 2, wherein the catalyst comprises only the metal phosphide, or further comprises as a support or a binder, carbon, an alkali earth metal oxide, an alkali metal oxide, alumina, silica, silica-alumina, zirconia, titania, silicon carbide, niobia, aluminum phosphate or a mixture thereof.

4. The catalyst as set forth in claim 2, wherein the metal phosphide obtained by binding the group VIB metal with P comprises MoP or WP in which an amount of Mo or W is 1~90 wt% and an amount ofP is 10~99 wt%.

5. The catalyst as set forth in claim 2, wherein the metal phosphide obtained by binding the group VIII metal with P comprises Ni₂P, PdP or PtP in which an amount ofNi, Pd or Pt is 1~90 wt% and an amount ofP is 10~99 wt%.

6. The catalyst as set forth in claim 2, wherein the metal phosphide obtained by binding the group VIIB metal with P comprises Co₂P, RuP, FeP or MnP in which an amount of Co, Ru, Fe or Mn is 1~90 wt% and an amount ofP is 10~99 wt%.

7. The catalyst as set forth in claim 2, wherein the catalyst containing P comprises NiMoP, CoMoP, CoNiMoP, CoNiP, NiWP, CoWP, CoNiWP, or MoWP, in which an amount of the active metal is 1~95 wt% and an amount of P is 5-99 wt%.

8. A method of preparing biodiesel through hydrotreating or isomerization using the catalyst of any one of claims 1 to 7.

9. The method as set forth in claim 8, wherein the preparing the biodiesel is performed using, as a feed, biomass of vegetable oil, vegetable fat, animal fat, fish oil, recycled fat, vegetable fatty acid, animal fatty acid or a mixture thereof.

10. The method as set forth in claim 9, wherein the fat comprises fat consisting of triglycerides each chain of which has 1~28 carbon atoms, and the fatty acid comprises fatty acid having 1~28 carbon atoms.

11. The method as set forth in claim 8, wherein the preparing the biodiesel is performed using, as the feed, a mixture of the biomass and 0~99% of at least one hydrocarbon.

12. The method as set forth in claim 11, wherein the hydrocarbon comprises kerosene, diesel, LGO, and recycled hydrotreated biodiesel.

13. The method as set forth in claim 8, further comprising pretreating the feed through hydrotreating, performing hydrodeoxygenation thus separating unreacted hydrogen, and cooling and separating produced hydrocarbon.

14. A biodiesel prepared through the method of claim 8.
